(19) Europäisches Patentamt
European Patent Office
Office européen des brevets

(11) **EP 2 124 187 A1**

(12) **EUROPEAN PATENT APPLICATION**

(43) Date of publication:
**25.11.2009 Bulletin 2009/48**

(51) Int Cl.:
***G06T 3/40*** (2006.01)

(21) Application number: **08156710.9**

(22) Date of filing: **22.05.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(71) Applicant: **Telefonaktiebolaget LM Ericsson (publ)**
**164 83 Stockholm (SE)**

(72) Inventor: **Xu, Sanbao**
**224 77 Lund (SE)**

(74) Representative: **Boesen, Johnny Peder**
**Zacco Denmark A/S**
**Hans Bekkevolds Allé 7**
**2900 Hellerup (DK)**

(54) **Apparatus and method for demosaicing**

(57) This invention relates to a device for and method of demosaicing digital image data, the method comprising providing a first (R), a second (B) and at least a third part (G; G1; G2) comprising colour intensity values, each part (R; G; B; G1; G2) comprising colour intensity values of a single colour according to a predetermined pattern of a predetermined resolution, wherein the method further comprises for each part (R; G; B; G1; G2) deriving a gradient image representing gradients ($\nabla f$) and a curvature image representing curvature of constant intensity ($\kappa$) based on the colour intensity values of the specific part (R; G; B; G1; G2), deriving a further gradient image comprising gradient values from said gradient images for each part, where the further gradient image has a gradient value for substantially each pixel, and deriving a further curvature image of constant intensity comprising values from said curvature images for each part, where the further curvature image has a curvature value for substantially each pixel, for each part (R; G; B; G1; G2) interpolating missing colour intensity values based on said further gradient image and said further curvature image of constant intensity.

In this way, a demosaicing process is enabled with improved image quality that may be faster than iterative demosaicing processes.

Figure 2

EP 2 124 187 A1

**Description**

**FIELD OF THE INVENTION**

The present invention relates generally to digital image processing. More specifically, the invention relates to a method of and a corresponding device for demosaicing. Furthermore, the invention relates to a computer readable medium having stored thereon instructions for causing one or more processing units to execute the method according to the invention.

**BACKGROUND OF THE INVENTION**

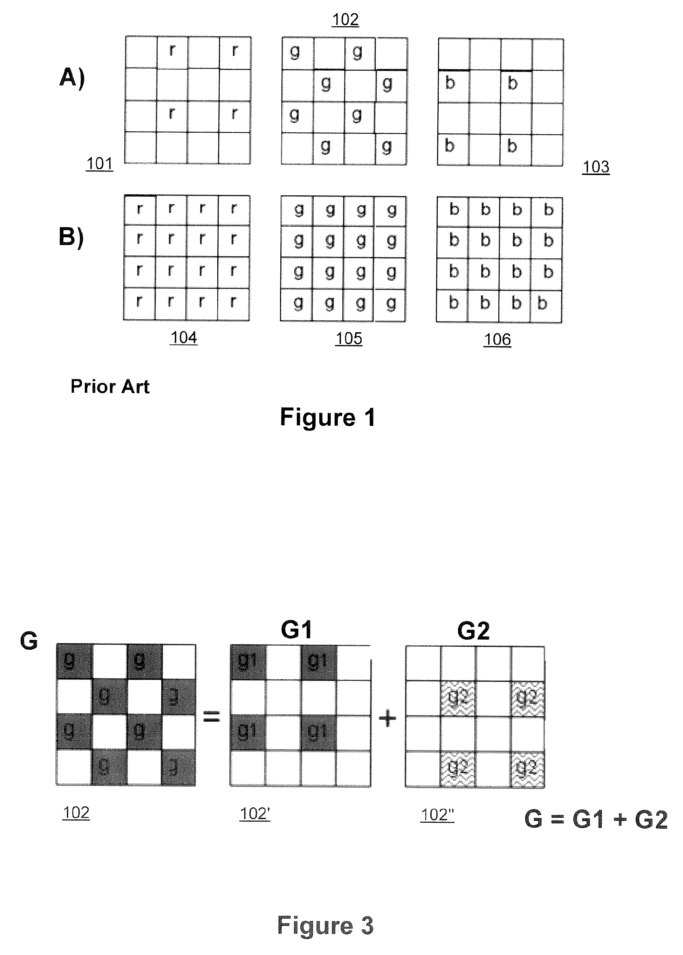

The well known and so-called colour filter array (CFA) is widely used in CCD (charge-coupled device) and CMOS (complementary metal-oxide semiconductor) imaging sensors that are a core element of certain digital cameras, mobile phone cameras, and/or other devices including digital imaging capabilities due to a limitation in silicon manufacture and/or cost reduction. The well-known Bayer pattern is the most common CFA for a single imaging sensor (see e.g. patent specification US 3,971,065). The Bayer pattern comprises a mosaic of R (red), G (green), and B (blue) colour components and is shown in Figure 1a (split up for each colour). However, since pixel values captured by a sensor with a Bayer pattern sub-samples the underlying continuous incident light signal there is a great deal of colour data loss. Various demosaicing (also sometimes denoted demosaicking) algorithms aim at making smart guesses of the missing colour data by interpolation to derive an image with R, G, and B data for each pixel, e.g. as illustrated in Figure 1b (again split up for each colour).

There exist a large number of various demosaicing methods being developed over the last 30 years. The simplest methods are classical linear interpolations, e.g. including nearest neighbour or pixel doubling, bilinear interpolation, and bicubic interpolation. There also exists so-called edge-directed interpolation that is an adaptive method that first analyses edges in an image first and if there is an edge in a local neighbourhood then chooses the interpolation along the edge and not across the edge. Another example is high quality linear interpolation, which is a gradient-corrected bilinear method where optimal coefficients of its eight 5x5 interpolation filters are determined from the well known Wiener approach.

Other methods - the so-called colour ratio methods - are adaptive as well. They use local colour ratios as weighting factors in the interpolation formulas instead of linear interpolation where the weights are fixed and constant over the whole image.

Due to undersampling, the Bayer pattern or similar CFAs cause undesired visual artefacts such as aliasing or jaggies, ringing, blocking, moiré patterns, etc. and/or colour sampling error. At least some of the previous local methods for image demosaicing can experience some limitations as they operate in a fixed local neighbourhood and typically do not consider the image structure other than edges whereby a missing colour value is interpolated from nearby known colour values within a fixed window. The interpolation is separate and independent for each different colour component (R, G, and B). The interpolation window is fixed and constant over the entire image. Various different interpolation algorithms typically only differ in the size of the interpolation filter, e.g. 2x2, 3x3 or 5x5 pixels, and its coefficients. Some methods employ adaptive interpolation so that the interpolation is done along a local edge, but not across edges in the image.

The sample pattern of the Bayer CFA is not aligned due to the alternating nature of the Bayer pattern, i.e. a single pixel only represent light in one of the colours R, G, or B. A plain geometric filling operation, as done by typical local interpolations, may cause errors in the interpolated colour values. The reason for this is that there are misalignments between the R, G, and B rows (or columns) in the raw Bayer data as can be seen from Figure 1 a. Another issue with simple local interpolation using intensity or colour values alone within a window of 3x3 or 5x5 pixels is that it is not sufficiently accurate. A large(r) interpolation window can usually improve accuracy but at the cost of a blurring effect and more computation. So simply increasing the size of the interpolation window is not an effective way of overcoming such issues. Thus there is a need for an improved demosaicing method and apparatus.

Furthermore, second order derivatives (the Laplacian) has also been used as a correction term in the simple averaging filter but not used as higher order approximation of the intensity function, nor related to the curvature of the constant intensity curve.

Also known is an iterative approach which interpolates the colour difference rather than the colour ratio where the estimate of missing data is successively refined by enforcing a constant colour difference by iteration. Colour misregistration artefacts are typically closely related to frequency aliasing in CFA and zipper artefacts are caused by over-enforcing the colour difference rule in iterative demosaicing. A spatially adaptive stopping criterion is proposed to suppress both types of artefacts.

"High Order Extrapolation Using Taylor Series for Color Filter Array Demosaicing", Lecture Notes in Computer Science, October 11 2007 discloses the use of a 2nd order Taylor series for a green component.

**OBJECT AND SUMMARY OF THE INVENTION**

It is an object of the invention to provide a demosaicing method (and corresponding device) that alleviates at least to an extent at least one of the abovementioned shortcomings.

Another object is to provide demosaicing without using iteration.

Yet another object is to provide reuse of calculation during demosaicing.

A further object is to provide demosaicing with improved accuracy.

Yet a further object is to reduce colour interpolation error.

This is achieved by a method (and corresponding device) of demosaicing digital image data, the method comprising providing a first, a second and at least a third part comprising colour intensity values, each part comprising colour intensity values of a single colour according to a predetermined pattern of a predetermined resolution, **characterized in that** the method further comprises for each part deriving a gradient image representing gradients and a curvature image representing curvature of constant intensity based on the colour intensity values of the specific part, deriving a further gradient image comprising gradient values from said gradient images for each part, where the further gradient image has a gradient value for substantially each pixel, and deriving a further curvature image of constant intensity comprising values from said curvature images for each part, where the further curvature image has a curvature value for substantially each pixel, for each part interpolating missing colour intensity values based on said further gradient image and said further curvature image of constant intensity.

In this way, a demosaicing process is enabled with improved image quality that may be faster than iterative demosaicing processes.

In one embodiment, the interpolation is done using up to a second order Taylor approximation.

Hereby, a better estimation of interpolated colour intensities is obtained.

In one embodiment, the interpolation is done using a weighting factor being inversely proportional to an edge strength within an interpolation window.

This avoids or minimizes impact for interpolation across edges which improve image quality.

In one embodiment, the method further comprises deriving a further curvature image of constant intensity comprising curvature values from curvature images for each part representing curvature of constant intensity, each curvature image being derived based on colour intensity values of the specific part, or curvature values derived on the basis of said first order derivatives, where the further curvature image has a curvature value for substantially each pixel and wherein the interpolating of missing colour intensity values for each part is further based on said further curvature image of constant intensity.

This improves the demosaiced image quality.

In one embodiment, the interpolation is done using a weighting factor being inversely proportional to a gradient magnitude determined from said further gradient image.

This avoids or minimizes impact for interpolation across edges which improve image quality.

In an alternative, a window in a given area is selected in response to edge information in a local neighbourhood where the edge information is represented by two eigenvectors and corresponding eigenvalues of a second-moment matrix calculated for the local neighbourhood.

Hereby, it is ensured that interpolation across edges is not done and interpolation error in colours near edges and/or around corners in the image will be reduced.

In one embodiment, the interpolation is done using an anisotropic window, i.e. a directionally dependent window, where a longest direction of a constant intensity curve near the interpolation point where the constant intensity curve is determined from said further curvature image of constant intensity.

This ensures that the interpolation is done along the constant intensity curve in the image, which would improve image quality and reduce interpolation error of colours.

In one embodiment, the gradient image for each part is derived based on first order derivatives of an image intensity function of the specific part.

In this way, gradient information is readily obtained.

In one embodiment, the curvature image for each part is derived based on said gradient image for each part or based on first order derivatives and second order derivatives of an image intensity function of the specific part.

In this way, curvature of constant intensity is readily obtained.

In one embodiment, the first part comprises red colour intensity values, said second part comprises blue colour intensity values, and said third part comprises green colour intensity values, wherein said third part comprises substantially twice the number of colour intensity values as the first part and where the first part and the second part substantially comprises the same number of colour intensity values.

In one embodiment, the first part comprises red colour intensity values, said second part comprises blue colour intensity values, and said third part comprises green colour intensity values and a fourth part comprises green colour intensity values where said third part and said fourth part is arranged in such a way that they each have substantially the same number of colour intensity values as the first part and where the first part and the second part substantially comprises the same number of colour intensity values.

In this way, computational effort is reduced.

In one embodiment, each part is sub-sampled in such a way that pixels having missing values are dropped.

In this way, computational effort is reduced.

The present invention also relates to a device for demosaicing digital image data, the device comprising a calculation unit adapted to provide a first, a second and at least a third part comprising colour intensity values, each part comprising colour intensity values of a single colour according to a predetermined pattern of a predetermined resolution, wherein the calculation unit is further adapted to: for each part derive a gradient image representing gradients or derive first order derivatives based on the colour intensity values of the specific part, derive a further gradient image comprising gradient values from said gradient images or said first order derivatives for each part, where the further gradient image has a gradient value for substantially each pixel, and for each part interpolate missing colour intensity values based on said further gradient image.

The embodiments of the device according to the present invention correspond to the embodiments of the method according to the present invention and have the same advantages for the same reasons. Advantageous embodiments of the device according to the present invention are defined in the sub-claims and described in the following.

Further, the invention also relates to a computer readable medium having stored thereon instructions for causing one or more processing units to execute the method according to the present invention.

## BRIEF DESCRIPTION OF THE DRAWINGS

These and other aspects of the invention will be apparent from and elucidated with reference to the illustrative embodiments shown in the drawings, in which:

Figures 1 a and 1b schematically illustrate a Bayer pattern or CFA decomposed into each primary colour component and a demosaiced image also decomposed into each primary colour component;

Figure 2 schematically illustrate a flow diagram of a demosaicing process carried out by a demosaicing device according to one embodiment;

Figure 3 schematically illustrate a decomposition of a G (green) part of a CFA into two parts, G1 and G2;

Figure 4 schematically illustrate an interpolation example using weight factors and gradient information of other colours;

Figure 5 schematically illustrate a gradient image;

Figure 6 schematically illustrate a curvature image; and

Figure 7 schematically illustrate the original picture that Figures 5 and 6 is based on.

## DESCRIPTION OF PREFERRED EMBODIMENTS

Figures 1 a and 1b schematically illustrates a Bayer pattern or CFA split up into each primary colour and a demosaiced image also split up into each primary colour.

Shown in Figure 1a are three 4x4 pixel parts (101, 102, 103) of a Bayer pattern or CFA, one part for each primary colour. The leftmost part (101) shows the R component, the middle part (102) shows the G component, and the rightmost part (103) shows the B component. The G component has twice as many pixels as either the R or the B component. As readily can be seen there is a misalignment between the individual components, i.e. only data of one primary colour exists at each pixel.

Shown in Figure 1b are three 4x4 pixel parts (104, 105, 106) - one for each primary colour - of a final image part after demosaicing where the colour data missing from Figure 1 a has been estimated using a given demosaicing process. This is readily known in the art.

For the 4x4 pixel parts of Figure 1 a and 1 b and in the following, a notation is used where the topmost and leftmost pixel is designated (0, 0) increasing to index (3, 3) for the bottommost and rightmost pixel. Furthermore, according to the used notation the x-direction is from left to right, i.e. the columns, and the y-direction is from top to bottom, i.e. the rows. Other notations may equally be used which could change the specific formulas listed throughout the text.

Before demosaicing, the red samples R can be expressed as r'(x,y) for x = odd & y = even, and 0 otherwise, where r'(x,y) is a known or obtained red colour value or sample at position (x,y).

In a similar manner the blue samples B can be expressed as b'(x,y) for x = even & y = odd, and 0 otherwise, where b'(x,y) is a known or obtained blue colour value or sample at position (x,y) and the green samples G can be expressed as g'(x,y) for x = even & y = even or for x = odd & y = odd, and 0 otherwise, where g'(x,y) is a known or obtained green colour value or sample at position (x,y).

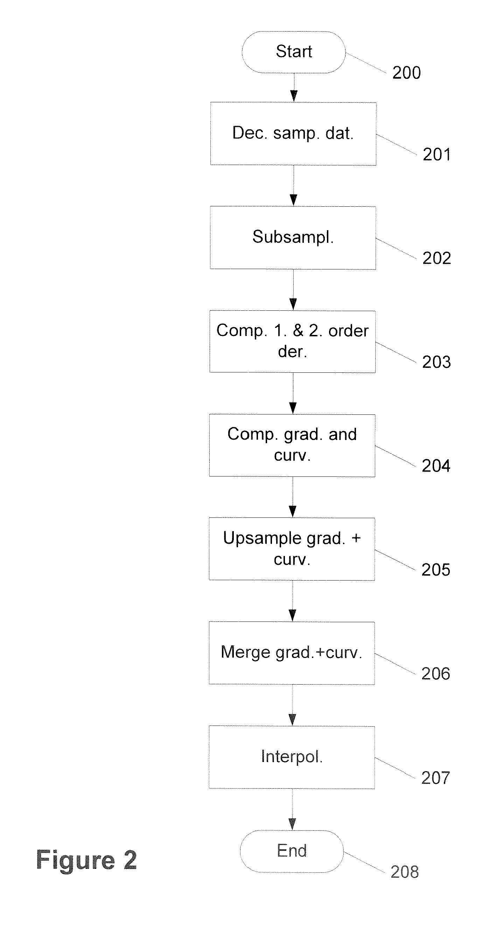

Figure 2 schematically illustrate a flow diagram of a demosaicing process carried out by a demosaicing device according to one embodiment. The process is initiated at step 200.

At step 201, the Bayer sample data, i.e. the light intensities obtained using a Bayer CFA or other CFA sample data (forth only Bayer CFA is mentioned), is decomposed into a number of channels or images. One example is to decompose the sample data into one channel or image for each of the primary colours R, G, and B, which would have a predetermined pattern corresponding in structure to the channels or images (forth denoted parts) as shown in Figure 1 a.

According to another embodiment, the Bayer sample data is decomposed into four parts where the previously mentioned G part instead is split into two parts e.g. designated G1 and G2. This is shown in Figure 3. Splitting the green data samples into two parts will make computation easier as the G1 and the G2 parts will have the same sampling rate, and thus the same number of known and missing pixels, as the blue and the red parts. The process is continued using the four parts R, G1, G2, and B but the same result could be obtained working only on the three parts R, G, and B but in a more complex way.

This decomposition - in either embodiment - could be for the entire image being sampled or one or more parts thereof.

At step 202, the four parts, R, G1, G2, and B are sub-sampled by a factor of two in both the x and the y direction in such a way that the pixels with a missing value are dropped so only the known or sampled pixel values are left. This - while not an absolute requirement - will make computation in some of the next steps computationally simpler.

If G1 is taken to be a reference image (it could be any of the four parts) then each of the R, G2, and B part needs an appropriate shift before down-sampling to bring the known values of each part at the same places as in G1.

At step 203, a first and a second order image derivative are obtained for each of the four sub-sampled parts of R, G1, G2, and B.

If f(x,y) represents the underlying image intensity function of the image being sampled by the Bayer CFA or one of the colour components (R, B, G1, and G2) then the first order derivatives at (x,y) is given by $f_x(x,y)$ and $f_y(x,y)$ with respect to the x- and y-direction, respectively while the second order derivatives at (x,y) is given by $f_{xx}(x,y)$, $f_{yy}(x,y)$, and $f_{xy}(x,y)$ with respect to the x- and y-directions.

A first derivative is indicative of edge information and a second derivative is indicative of curvature of an intensity surface and they thus indicate structural image properties.

Any first or second order derivative filters or functions can be used, but preferably the filters should have substantially the same pass band and stop band.

The image derivatives will also be in sub-sampled form as the image data from which they were derived from was sub-sampled.

Alternatively, a first and a second order image derivative are obtained for each of the four parts of R, G1, G2, and B (without sub-sampling), whereby step 202 is not needed.

At step 204, gradients (both magnitude and direction) and curvatures (being curves of constant intensity) are calculated for the four parts R, G1, G2, and B.

There are potentially many usable ways of deriving the gradients and curvatures.

According to one embodiment, the gradients (both magnitude and directions) and curvatures (of constant intensity) are calculated based on the first and second order image derivatives obtained at step 203.

According to one embodiment, the gradients for each part are calculated as:

$$\nabla f = \begin{bmatrix} f_x & f_y \end{bmatrix}^T ,$$

where $f_x$ and $f_y$ are the first order derivatives of the function f(x,y) representing the underlying image intensity function of the image being sampled by the Bayer CFA for the specific part.

According to one embodiment, the curvature for each part is calculated as:

$$\kappa = div\left(\frac{\nabla f}{\|\nabla f\|}\right) = -\frac{f_x^2 f_{xx} - 2 f_x f_y f_{xy} + f_y^2 f_{xx}}{\left(f_x^2 + f_y^2\right)^{3/2}}$$

where $f_x$ and $f_y$ are first order derivatives and $f_{xx}$, $f_{xy}$, and $f_{xy}$ are second order derivatives of the function $f(x,y)$ representing the underlying image intensity function of the image being sampled by the Bayer CFA for the specific part.

Please note, that the curvature calculated according to the above expression represents a curve of constant intensity rather than a curvature of the intensity function (which is related directly to a second derivative on the intensity function, i.e. $f_{xx}$, $f_{yy}$, or $f_{xy}$).

Furthermore, the gradient and the curvature images from the four parts will complement each other as a given pixel only will have a value either in the R, B, G1, or G2 part.

Since each part (R, B, G1, and G2) originally contained a lot of zero values computational effort is saved by working on the sub-sampled parts obtained at step 202.

As the derivatives were sub-sampled the gradient and the curvature image or data are also sub-sampled, i.e. not at full resolution, which makes it difficult to use in interpolation.

At step 205, the calculated gradient and curvatures for each part are up-sampled by a factor of two in both the x and the y direction, i.e. zeros are filled in at appropriate places in the result obtained at the previous step.

Furthermore, appropriate shifts are made for the gradient and the curvature image of each R, G1, G2, and B part so that the gradient and curvature values will correspond to their original decomposed parts. Thus after up-sampling, the gradient and curvature images of each part will have the resolution of the original R, G1, G2, and B parts and will have the same number of zero-valued pixels and will complement each other in a similar way as the parts in Figure 1 a do.

Please note, that if step 202 is not done, then step 205 is not needed either.

At step 206, the (up-sampled and shifted) gradient and curvature parts from step 205 are merged to form a further or complete gradient and curvature image for the full resolution image that has the same size as the original Bayer sample data, i.e. is at full resolution and has values at each pixel.

It has been realised that it is still possible to obtain information of variation from the known colour component as this variation is realised to be similar to the variation in the other two colour components signifying that edges in one colour part would not be much different from those in another colour part. So, as an example, even though red values are missing at certain pixels their changes could be obtained from the changes in green or blue as if the red values had been measured. Similarly, change for green or blue pixels could be obtained from changes in one of the other primary colours.

Using this realization, the full resolution gradient image and the full resolution curvature image is simply derived by merging the gradient and curvature data, respectively, for each part or inserting pixels from the other parts at pixels missing a value or containing a zero-value.

Thus a full resolution gradient image and a full resolution curvature image are obtained in a simple way, which are used in the following interpolation process in order to enhance the image quality of the demosaiced image.

As an alternative, the computed derivative images (first and second order) for each part may be up-sampled followed by merging the up-sampled complementary derivative images forming a full resolution first and second derivative images that can be used to calculate full resolution gradient and curvature images using the above expressions working on the full resolution derivative images instead of derivatives of the parts. Each pixel in the full resolution first and second order derivative images will miss two colour components or colour intensity values.

At step 207, interpolation is done.

Various interpolation techniques may be applied. The further complete gradient and curvature image of constant intensity of full resolution will enhance the quality of such interpolation techniques.

According to one embodiment, interpolation of the missing colour parts is done in the following way.

In this interpolation process, a second order Taylor expansion of the image function is used. Let - like above - $f(x,y)$ represent the underlying image intensity function of the image being sampled by the Bayer CFA or one of the colour components (R, B, G1, and G2) and the first order derivatives at $(x,y)$ be given by $f_x(x,y)$ and $f_y(x,y)$ with respect to the x- and y-direction, respectively while the second order derivatives at $(x,y)$ is given by $f_{xx}(x,y)$, $f_{yy}(x,y)$, and $f_{xy}(x,y)$ with respect to the x- and y-directions.

If $(x_0, y_0)$ is a sampled pixel at which the intensity or one of its colour components is known and $(x, y)$ is a point (not necessarily a pixel position) near $(x_0, y_0)$ then according to the Taylor series expansion we have:

$$f(x,y) = f(x_0, y_0) + f_x(x_0, y_0)(x - x_0) + f_y(x_0, y_0)(y - y_0) +$$

$$\tfrac{1}{2}\left(f_{xx}(x_0, y_0)(x - x_0)^2 + 2f_{xy}(x_0, y_0)(x - x_0)(y - y_0) + f_{yy}(x_0, y_0)(y - y_0)^2\right) +$$

$$O(x^3, y^3) + \dots$$

Where $O(x^3,y^3)+\dots$ is the sum of higher order terms that typically are so small that they readily can be omitted, which is done for the following calculation.

The first and second order derivatives were already calculated at step 203.

Using the above-mentioned notation where the topmost and leftmost pixel in a given part is designated (0, 0) increasing to index ($n$, $n$) (or even ($n$, $m$)) where $n$ and $m$ are integers and the x-direction is from left to right, i.e. the columns, and the y-direction is from top to bottom, i.e. the rows, then for the R part there is red sample values at the grid positions of ($2x+1$, $2y$) and there is a need for interpolating red values at ($2x$, $2y$), ($2x$, $2y+1$), and ($2x+1$, $2y+1$), i.e. at the immediate left pixel, the immediate lower left pixel, and the lower pixel to the pixel where the red value is known.

As mentioned other notations could readily be used as well.

As an example, the green data, i.e. the G or G1 and G2 image, is interpolated first.

It is to be noted that the order of the colours that the interpolation process works on is not significant. The interpolation process could choose any order of colours even or do them in parallel.

Using the second order Taylor expansion, the contributions from the known red value to its neighbour pixels having unknown or missing red values is given (neglecting the higher order terms) by

$$r(2x_0, 2y_0) = r(2x_0 + 1, 2y_0) - r_x(2x_0 + 1, 2y_0) + \tfrac{1}{2} r_{xx}(2x_0 + 1, 2y_0),$$

$$r(2x_0, 2y_0 + 1) = r(2x_0 + 1, 2y_0) - r_x(2x_0 + 1, 2y_0) + r_y(2x_0 + 1, 2y_0) +$$
$$\tfrac{1}{2}\left(r_{xx}(2x_0 + 1, 2y_0) - 2 r_{xy}(2x_0 + 1, 2y_0) + r_{yy}(2x_0 + 1, 2y_0)\right),$$

$$r(2x_0 + 1, 2y_0 + 1) = r(2x_0 + 1, 2y_0) + r_y(2x_0 + 1, 2y_0) + \tfrac{1}{2} r_{yy}(2x_0 + 1, 2y_0),$$

where $r(x, y)$ is the underlying image intensity function for the red colour component, $r_x$ is the first derivative function with respect to x, $r_{xx}$ is the second derivative function with respect to x, $r_y$ is the first derivative function with respect to y, $r_{yy}$ is the second derivative function with respect to y, and $r_{xy}$ is the second derivative function with respect to x and y.

For the blue part there exist sample values at ($2x$, $2y + 1$) and there is a need to interpolate values at ($2x$, $2y$), ($2x + 1$, $2y$), and ($2x + 1$, $2y + 1$), i.e. at the pixel immediately above, the immediate upper right pixel, and the immediate left pixel to the pixel where the blue value is known.

In a similar manner, the contributions from the known blue value to its neighbour pixels having unknown or missing blue values is given (neglecting the higher order terms) by

$$b(2x_0, 2y_0) = b(2x_0, 2y_0 + 1) - b_y(2x_0, 2y_0 + 1) + \tfrac{1}{2} b_{yy}(2x_0, 2y_0 + 1),$$

$$b(2x_0 + 1, 2y_0) = b(2x_0, 2y_0 + 1) - b_x(2x_0, 2y_0 + 1) + b_y(2x_0, 2y_0 + 1) +$$
$$\tfrac{1}{2}\left(b_{xx}(2x_0, 2y_0 + 1) - 2 b_{xy}(2x_0, 2y_0 + 1) + b_{yy}(2x_0, 2y_0 + 1)\right),$$

$$b(2x_0 + 1, 2y_0 + 1) = b(2x_0, 2y_0 + 1) + b_x(2x_0, 2y_0 + 1) + \tfrac{1}{2} b_{xx}(2x_0, 2y_0 + 1),$$

where $b(x, y)$ is the underlying image intensity function for the blue colour component, $b_x$ is the first derivative function with respect to x, $b_{xx}$ is the second derivative function with respect to x, $b_y$ is the first derivative function with respect to y, $b_{yy}$ is the second derivative function with respect to y, and $b_{xy}$ is the second derivative function with respect to x and y.

For the green part or parts (i.e. G or G1 and G2, see e.g. Figure 3) there are sample values at $(2x, 2y)$ (for G1) and $(2x + 1, 2y + 1)$ (for G2) and there is a need to interpolate values at $(2x + 1, 2y)$, and $(2x, 2y +1)$ i.e. at the pixel immediately to the right of the known G1 pixel and immediately above the known G2 pixel and immediately below the known G1 pixel and immediately to the left of the known G2 pixel.

In a similar manner, the contributions from the known green value (from G1) to its neighbour pixels having unknown or missing green values is given (neglecting the higher order terms) by

$$g(2x_0 + 1, 2y_0) = g(2x_0, 2y_0) + g_x(2x_0, 2y_0) + \tfrac{1}{2} g_{xx}(2x_0, 2y_0),$$

$$g(2x_0, 2y_0 + 1) = g(2x_0, 2y_0) + g_y(2x_0, 2y_0) + \tfrac{1}{2} g_{yy}(2x_0, 2y_0),$$

and the contributions from the known green value (from G2) to its neighbour pixels having unknown or missing green values is given (neglecting the higher order terms) by

$$g(2x_0+1, 2y_0)=g(2x_0+1, 2y_0+1) - g_y(2x_0 + 1, 2y_0 + 1) + \tfrac{1}{2} g_{yy}(2x_0 + 1, 2y_0 + 1),$$

$$g(2x_0, 2y_0+1)=g(2x_0+1, 2y_0+1) - g_x(2x_0 + 1, 2y_0 + 1) + \tfrac{1}{2} g_{xx}(2x_0 + 1, 2y_0 + 1),$$

where $g(x, y)$ is the underlying image intensity function for the green colour component, $g_x$ is the first derivative function with respect to x, $g_{xx}$ is the second derivative function with respect to x, $g_y$ is the first derivative function with respect to y, $g_{yy}$ is the second derivative function with respect to y, and $g_{xy}$ is the second derivative function with respect to x and y.

It is to be noted, that in the above given interpolation expressions $2x_0 +1$ or $2y_0 +1$ on the left side could also be $2x_0-1$ or $2y_0-1$. In this case the expressions just need to be changed slightly by changing sign in front of the first order derivatives and the cross term ($g_{xy}$) of the second derivative.

If the computation of the derivates is done on the down-sampled images that contain no missing pixels, the expressions need to be modified by multiplying with ½ to the first order derivative terms and ¼ to the second order derivative terms due to interpolating halfway between pixels, whereby the expressions would have the coefficient ½ in front of the first order derivatives and 1/8 in front of the second order derivatives.

Thus the missing pixels for each part, i.e. for each colour R, G, and B may be interpolated using the above given interpolation expressions using known neighbouring intensity values contributing to the pixel being interpolated whereby a demosaiced image is constructed. It is done without using iteration and thus is faster than typical such processes. Using a higher Taylor approximation (up to second order), the interpolation process is also more accurate compared to some other interpolation schemes as also derivatives (reflecting image properties like edge information and curvature of an intensity surface) and not just intensity itself is taken into account.

The described interpolation process has a square interpolation window or neighbourhood of 2x2 pixels, but could just as readily be 3x3 or 4x4, etc. or even larger.

Alternatively, the demosaiced image is constructed using only first order Taylor approximation or as other alternatives using higher (than 2) order Taylor approximations, e.g. third order Taylor approximation.

According to an aspect, an adaptive interpolation window or neighbourhood (forth only denoted window) is used instead of a fixed square pixel window. The window is adaptively, configured based on the local image structure e.g. using the curvature information obtained at step 204. If this aspect is not used, then there is no need for obtaining the curvature information at step 204 and up-sample and merge it at steps 205 and 206, respectively.

According to this aspect, the obtained curvature information, which was curves of constant intensity, of full resolution, i.e. the further curvature image, is used to ensure (at least to some extent) that interpolation is done, if possible, along a (local) constant intensity curve. More specifically, the interpolation window is anisotropic and adaptive, so that its shape and/or orientation and therefore possibly its size are changed according to the curves of constant intensity.

One example is e.g. to chose a 2x4, or 3x5 pixel window or even larger non-square windows where the longest direction is in the direction of a (local) constant intensity curve. Thus the window will focus on areas with a (strong) edge and is narrower in a direction substantially perpendicular to an edge and longer in a direction substantially tangential to the edge.

According to another exemplary embodiment, the anisotropic window may be derived as explained in the following,

A second-moment matrix $M$ is calculated from the earlier computed first derivatives, $f_x(x,y)$ and $f_y(x,y)$ derived at step 203 as

$$M = \begin{bmatrix} \sum_{(x,y)\in\Omega} f_x^2(x,y) & \sum_{(x,y)\in\Omega} f_x(x,y)f_y(x,y) \\ \sum_{(x,y)\in\Omega} f_x(x,y)f_y(x,y) & \sum_{(x,y)\in\Omega} f_y^2(x,y) \end{bmatrix} \;,$$

where the sum is taken over a predefined isotropic (i.e. square) window $\Omega$.

It is also possible to calculate $M$ using a Gaussian weighted sum, that is, multiplying different Gaussian weights to each item in the summations, with the weights depending on the position of the item relative to the center pixel of the window. This matrix by weighted sum can equivalently be computed in two steps: first calculating the original $M$ matrix, then convolving it with a Gaussian smoothing filter. Guassian weighting enhances robustness and $M$ weighted by a Gaussian will be less affected by noise in the image data than a non-Gaussian weighted $M$, whereby the associated eigenvalues and eigenvectors obtained below will be more reliable.

Once the matrix $M$ is obtained (at each pixel or each pixel for a part of the image), its two eigenvalues, $\lambda_1$ and $\lambda_2$ are computed. These are non-negative and their corresponding eigenvectors typically encode much of the local image structures. In particular, the eigenvalues are indicative of the edge strength and the eigenvectors indicate the edge direction which is along the gradient direction, namely perpendicular to the edge orientation. If both eigenvalues are small (close to zero), then the local image is basically a homogenous region (containing no edge). If one of the eigenvalues is significant while the other is small, then there exists an edge whose direction is indicated by the eigenvector corresponding to the significant eigenvalue and the edge strength is given by the square root of the significant eigenvalue. If both eigenvalues are significant, then it means that there is a corner in the local image neighbourhood.

Given the above, an adaptive and anisotropic interpolation window may be obtained by analyzing the matrix $M$. First, the second-moment matrix M is computed in a local isotropic window around a given pixel under consideration. Secondly, two eigenvalues of the matrix $M$ are calculated.

Depending upon the derived values of the eigenvalues, the following decisions are made:

- If both eigenvalues $\lambda_1$ and $\lambda_2$ are small, then there is edge in the local neighborhood and the interpolation window is taken to be isotropic (typically square, e.g., 3x3 or 5x5).
- If one eigenvalue is large while the other is small, then there is an edge in the local window. Therefore, an anisotropic interpolation window (e.g. rectangular or elliptical) is used. The shorter side (axis) is along the eigenvector of the major eigenvalue (that is, crossing the edge or on the gradient direction), while the longer side (axis) is perpendicular to that eigenvector, namely it is tangential to the edge. For instance, the interpolation window is of size 2x4, 3x5 pixels, etc.
- If both eigenvalues $\lambda_1$ and $\lambda_2$ are large (i.e. the smaller one of them is larger than a predefined threshold) then there is a corner within the local window. In this case, the interpolation window will be a quadrant or corner part of the local neighborhood or the complement of a quadrant or corner part, depending on where the current pixel is located. Thus, the interpolation window is selected to cover only pixels in a region to which the current pixel belongs.

This will ensure that interpolation across edges is not done and will reduce interpolation error in colours near edges and/or around corners in the image.

According to another exemplary embodiment, the anisotropic window may be derived in a similar way using the derived curves of constant intensity since a vector along a curve of constant intensity (or a contour vector) is perpendicular to the gradient vector or gradient direction, where the eigenvectors of the above approach indicated an edge direction along the gradient direction.

By including the use of curvature information, image structures in the form of geometrical structures (e.g. edges, lines, curves, and shapes or other examples) is taken into account in the interpolation process, which may enhance the quality of the demosaiced image.

According to an additional aspect, which may be used alone or in connection with the curvature aspect described above, the quality of the interpolation process may be enhanced further by using the obtained further gradient image, indicative of geometrical structural information, to derive weights in the interpolation process. The gradient magnitude indicates edge strength. If there is a strong edge in a given direction then there will be a small difference in colour intensity along the edge and a large difference in colour intensity across the edge. So in order to enhance the interpolation process it should be ensured that neighbouring pixels across an edge is not used (or used to a lesser extent) but pixels along an edge is used (or used to a larger extent) in the interpolation process.

This is according to this aspect ensured by assigning a weight factor that is inversely proportional to values of the further gradient image.

More specifically, a weight could be used that is $w = 1/\|\nabla f\|$, where $\|\nabla f\|$ is the gradient derived previously, when there is an edge. However, if there is no strong edge it is still preferred to perform a weighted interpolation. Therefore one plus is included in the denominator to avoid dividing by zero thus giving the following expression for a weight factor:

$$w = \frac{1}{1 + \|\nabla f\|}$$

Thus the interpolated value is given by:

$$p(x,y) = \frac{1}{\sum_{(i,j)\in D} w(i,j)} \sum_{(i,j)\in D} w(i,j) \cdot f(i,j)$$

where D is the neighbourhood, i.e. the interpolation window, around (x,y) which is the pixel location to be interpolated and f(i,j) is the value of each known pixel within D. The first term of the expression normalizes the result. If the gradient magnitude at a pixel is zero or very small that pixel will make a large contribution (the entire value given by f(i,j) or close thereto) while if the gradient magnitude is large at a pixel its contribution will be very small (due to the weight being zero or nearly zero).

In this way, this particular weighting will effectively avoid interpolating across edges, which enhances the interpolation quality.

Furthermore, due to the misalignment between the values of the colour parts, i.e. the check-board like patterns of the known R, G, and B values not coinciding with each other as indicated in Figure 1A), an issue may arise in the demosaicing process.

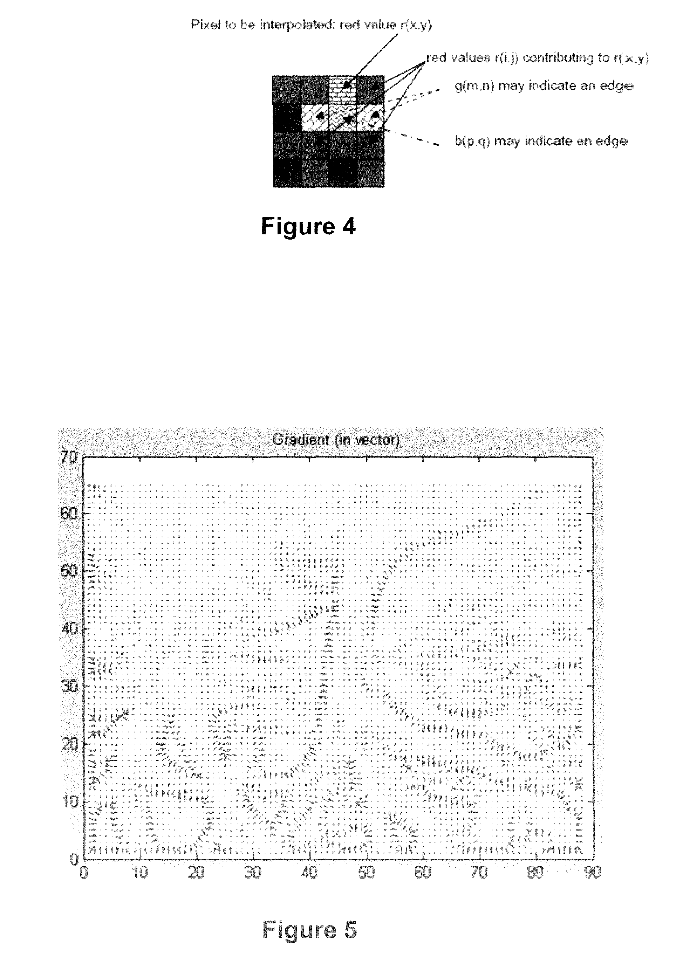

This may be addressed by instead of using $\|\nabla f(i,j)\|$ then using $\|\nabla c(x,y)\|$ of another known colour part at another location nearby. This is explained in greater detail in the following with reference to Figure 4 schematically illustrating an interpolation example using weight factors and gradient information of other colours.

In this example, a red value is to be interpolated at a pixel where only the green intensity value is known, so f (i,j) is r(i,j), the underlying image intensity function for the red colour component, and there will be contributions from the red known values within the interpolation window D. However, the gradient magnitude of the green or blue pixel is used as a weight, where the green or blue pixel is an edge-indicating pixel. Using the edge-indicating pixel instead of the red contributing pixel will reduce colour interpolation error.

The decision of which edge-indicating pixel to use may be based on the further gradient image e.g. by using the pixel with the strongest edge magnitude.

I.e. the weight is:

$$w(i,j) = \frac{1}{1+\left\|\nabla g(m,n)\right\|}, \ or \ \ w(i,j) = \frac{1}{1+\left\|\nabla b(p,q)\right\|}$$

Where $\left\|\nabla g(m,n)\right\|$ is the gradient magnitude of a green edge-indicating pixel within the interpolation window at a different location than the red contributing pixel and where $\left\|\nabla b(p,q)\right\|$ is the gradient magnitude of a blue edge-indicating pixel within the interpolation window at a different location than the red contributing pixel.

If there is no green or blue edge-indicating pixel then the red gradient magnitude

$$w(i,j) = \frac{1}{1+\left\|\nabla r(i,j)\right\|}$$

could be used where $\left\|\nabla r(i,j)\right\|$ is the gradient magnitude of the red contributing pixel.

Thus if an edge at a green or blue pixel is determined, a 'penalty' is given to the red pixel r(i,j) that is contributing to r(x,y) in the form of the inverse of a strong gradient magnitude at g(m,n) or b(p,q).

This will reduce colour interpolation error improving the quality of the demosaiced image.

At step 208, the process terminates.

Figure 3 schematically illustrate a decomposition of a G (green) part of a CFA into two parts, G1 and G2. Shown are a green part G (102) that is decomposed in two green parts G1 (102') and G2 (102") instead of one part, where the split into G1 (102') and G2 (102") will make computation easier as the G1 (102') and the G2 (102") parts will have the same sampling rate, and thus the same number of known and missing pixels, as the blue and the red parts.

Figure 4 schematically illustrate an interpolation example using weight factors and gradient information of other colours. This has been explained in connection with Figure 2.

Figure 5 schematically illustrate a gradient image. Shown is one visualization scheme of an exemplary gradient image illustrating both magnitude and direction in vector form representing such a gradient image that may be derived at step 204 in Figure 2.

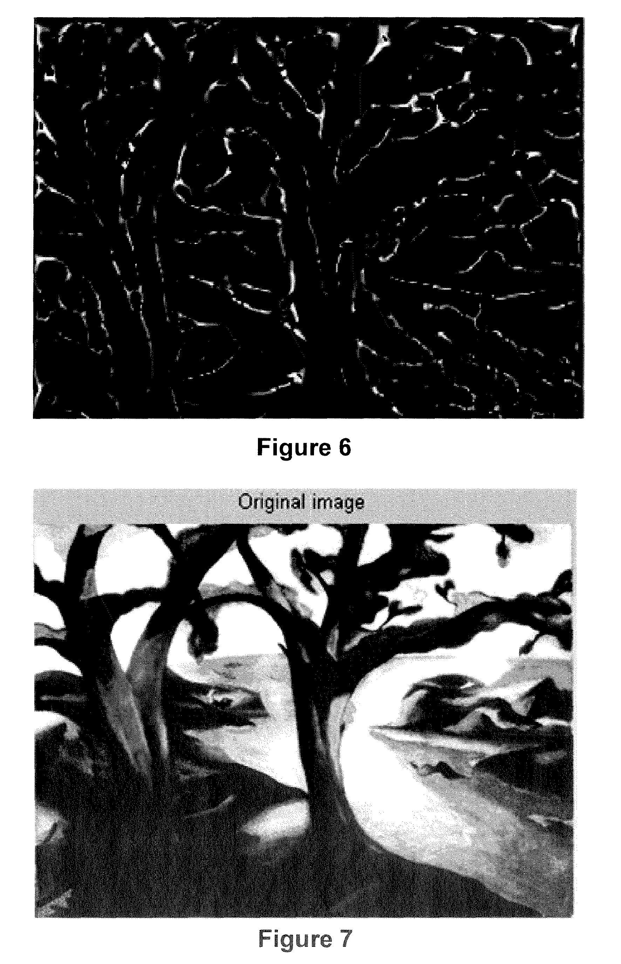

Figure 6 schematically illustrate a curvature image. Shown is one visualization scheme of an exemplary curvature image of constant intensities, such as one that may be derived at step 204 in Figure 2.

Figure 7 schematically illustrate the original picture that Figures 5 and 6 is based on.

In the claims, any reference signs placed between parentheses shall not be constructed as limiting the claim. The word "comprising" does not exclude the presence of elements or steps other than those listed in a claim. The word "a" or "an" preceding an element does not exclude the presence of a plurality of such elements.

The invention can be implemented by means of hardware comprising several distinct elements, and by means of a suitably programmed computer. In the device claim enumerating several means, several of these means can be embodied by one and the same item of hardware. The mere fact that certain measures are recited in mutually different dependent claims does not indicate that a combination of these measures cannot be used to advantage.

**Claims**

**1.** A method of demosaicing digital image data, the method comprising

• providing a first (R), a second (B) and at least a third part (G; G1; G2) comprising colour intensity values, each part (R; G; B; G1; G2) comprising colour intensity values of a single colour according to a predetermined pattern of a predetermined resolution,

**characterized in that** the method further comprises

• for each part (R; G; B; G1; G2) deriving a gradient image representing gradients ($\nabla f$) or deriving first order derivatives ($f_x$, $f_y$) based on the colour intensity values of the specific part (R; G; B; G1; G2),
• deriving a further gradient image comprising gradient values from said gradient images or said first order derivatives ($f_x$, $f_y$) for each part, where the further gradient image has a gradient value for substantially each pixel, and

• for each part (R; G; B; G1; G2) interpolating missing colour intensity values based on said further gradient image.

2. A method of demosaicing according to claim 1, wherein said interpolation is done using up to a second order Taylor approximation.

3. A method of demosaicing according to any one of claims 1 or 2, wherein the interpolation is done using a weighting factor being inversely proportional to an edge strength within an interpolation window.

4. A method of demosaicing according to any one of claims 1 - 3, wherein the interpolation is done using a weighting factor being inversely proportional to a gradient magnitude determined from said further gradient image.

5. A method of demosaicing according to any one of claims 1 - 4, wherein the method further comprises deriving a further curvature image of constant intensity comprising

  • curvature values from curvature images for each part (R; G; B; G1; G2) representing curvature of constant intensity ($\kappa$), each curvature image being derived based on colour intensity values of the specific part (R; G; B; G1; G2), or
  • curvature values derived on the basis of said first order derivatives ($f_x$, $f_y$),

where the further curvature image has a curvature value for substantially each pixel and wherein the interpolating of missing colour intensity values for each part (R; G; B; G1; G2) is further based on said further curvature image of constant intensity.

6. A method of demosaicing according to claim 5, wherein the interpolation is done using an anisotropic window where a longest direction of a constant intensity curve near the interpolation point where the constant intensity curve is determined from said further curvature image of constant intensity.

7. A method of demosaicing according to any one of claims 1 - 4, wherein a window in a given area is selected in response to edge information in a local neighbourhood where the edge information is represented by two eigenvectors and corresponding eigenvalues ($\lambda_1$, $\lambda_2$) of a second-moment matrix (M) calculated for the local neighbourhood.

8. A method of demosaicing according to any one of claims 1 - 7, wherein said gradient image for each part (R; G; B; G1; G2) is derived based on first order derivatives ($f_x$ and $f_y$) of an image intensity function of the specific part (R; G; B; G1; G2).

9. A method of demosaicing according to any one of claims 5 - 6, wherein said curvature image for each part (R; G; B; G1; G2) is derived based on said gradient image for each part (R; G; B; G1; G2) or based on first order derivatives ($f_x$ and $f_y$) and second order derivatives ($f_{xx}$, $f_{xy}$, and $f_{xy}$) of an image intensity function of the specific part (R; G; B; G1; G2).

10. A method of demosaicing according to any one of claims 1 - 9, wherein said first part (R) comprises red colour intensity values, said second part (B) comprises blue colour intensity values, and said third part (G) comprises green colour intensity values, wherein said third part (G) comprises substantially twice the number of colour intensity values as the first part and where the first part and the second part substantially comprises the same number of colour intensity values.

11. A method of demosaicing according to any one of claims 1 - 9, wherein said first part (R) comprises red colour intensity values, said second part (B) comprises blue colour intensity values, and said third part (G1) comprises green colour intensity values and a fourth part (G2) comprises green colour intensity values where said third part (G1) and said fourth part (G2) is arranged in such a way that they each have substantially the same number of colour intensity values as the first part and where the first part and the second part substantially comprises the same number of colour intensity values.

12. A method of demosaicing according to any one of claims 1 - 11, wherein each part (R; G; B; G1; G2) is sub-sampled in such a way that pixels having missing values are dropped.

13. A device for demosaicing digital image data, the device comprising

• a calculation unit adapted to provide a first (R), a second (B) and at least a third part (G; G1; G2) comprising colour intensity values, each part (R; G; B; G1; G2) comprising colour intensity values of a single colour according to a predetermined pattern of a predetermined resolution,

wherein the calculation unit is further adapted to:

• for each part (R; G; B; G1; G2) derive a gradient image representing gradients ($\nabla f$) or derive first order derivatives ($f_x$, $f_y$) based on the colour intensity values of the specific part (R; G; B; G1; G2),
• derive a further gradient image comprising gradient values from said gradient images or said first order derivatives ($f_x$, $f_y$) for each part, where the further gradient image has a gradient value for substantially each pixel, and
• for each part (R; G; B; G1; G2) interpolate missing colour intensity values based on said further gradient image.

14. A device for demosaicing according to claim 13, wherein said calculation unit is adapted to interpolate using up to a second order Taylor approximation.

15. A device for demosaicing according to any one of claims 13 or 14, wherein said calculation unit is adapted to interpolate using a weighting factor being inversely proportional to an edge strength within an interpolation window.

16. A device for demosaicing according to any one of claims 13 - 15, wherein said calculation unit is adapted to interpolate using a weighting factor being inversely proportional to a gradient magnitude determined from said further gradient image.

17. A device for demosaicing according to any one of claims 13 - 16, wherein said calculation unit is further adapted to derive a further curvature image of constant intensity comprising

• curvature values from curvature images for each part (R; G; B; G1; G2) representing curvature of constant intensity ($\kappa$), each curvature image being derived based on colour intensity values of the specific part (R; G; B; G1; G2), or
• curvature values derived on the basis of said first order derivatives ($f_x$, $f_y$),

where the further curvature image has a curvature value for substantially each pixel and wherein said calculation unit is further adapted to interpolate the missing colour intensity values for each part (R; G; B; G1; G2) based on said further curvature image of constant intensity.

18. A device for demosaicing according to claim 17, wherein said calculation unit is adapted to interpolate using an anisotropic window where a longest direction of a constant intensity curve near the interpolation point where the constant intensity curve is determined from said further curvature image of constant intensity.

19. A device for demosaicing according to any one of claims 13 - 16, wherein said calculation unit is adapted to select a window in a given area in response to edge information in a local neighbourhood where the edge information is represented by two eigenvectors and corresponding eigenvalues ($\lambda_1$, $\lambda_2$) of a second-moment matrix (M) calculated for the local neighbourhood.

20. A device for demosaicing according to any one of claims 13 - 19, wherein said gradient image for each part (R; G; B; G1; G2) is derived based on first order derivatives ($f_x$ and $f_y$) of an image intensity function of the specific part (R; G; B; G1; G2).

21. A device for demosaicing according to any one of claims 17 - 18, wherein said curvature image for each part (R; G; B; G1; G2) is derived based on said gradient image for each part (R; G; B; G1; G2) or based on first order derivatives ($f_x$ and $f_y$) and second order derivatives ($f_{xx}$, $f_{xy}$, and $f_{xy}$) of an image intensity function of the specific part (R; G; B; G1; G2).

22. A device for demosaicing according to any one of claims 13 - 21, wherein said first part (R) comprises red colour intensity values, said second part (B) comprises blue colour intensity values, and said third part (G) comprises green colour intensity values, wherein said third part (G) comprises substantially twice the number of colour intensity values as the first part and where the first part and the second part substantially comprises the same number of colour intensity values.

**23.** A device for demosaicing according to any one of claims 13 - 21, wherein said first part (R) comprises red colour intensity values, said second part (B) comprises blue colour intensity values, and said third part (G1) comprises green colour intensity values and a fourth part (G2) comprises green colour intensity values where said third part (G1) and said fourth part (G2) is arranged in such a way that they each have substantially the same number of colour intensity values as the first part and where the first part and the second part substantially comprises the same number of colour intensity values.

**24.** A device for demosaicing according to any one of claims 13 - 23, wherein said calculation unit is adapted to sub-sampled each part (R; G; B; G1; G2) in such a way that pixels having missing values are dropped.

**25.** A computer readable medium having stored thereon instructions for causing one or more processing units to execute the method according to any one of claims 1 - 12.

102

A)

101    103

B)

104                105                106

Prior Art

# Figure 1

G        G1        G2

102        102'        102"        G = G1 + G2

# Figure 3

```
          ┌─────────────┐
          │    Start     │——— 200
          └──────┬──────┘
                 │
                 ▼
          ┌─────────────┐
          │ Dec. samp. dat. │——— 201
          └──────┬──────┘
                 │
                 ▼
          ┌─────────────┐
          │  Subsampl.   │——— 202
          └──────┬──────┘
                 │
                 ▼
          ┌─────────────┐
          │ Comp. 1. & 2. order │
          │     der.     │——— 203
          └──────┬──────┘
                 │
                 ▼
          ┌─────────────┐
          │ Comp. grad. and │
          │     curv.    │——— 204
          └──────┬──────┘
                 │
                 ▼
          ┌─────────────┐
          │ Upsample grad. + │
          │     curv.    │——— 205
          └──────┬──────┘
                 │
                 ▼
          ┌─────────────┐
          │ Merge grad.+curv. │——— 206
          └──────┬──────┘
                 │
                 ▼
          ┌─────────────┐
          │  Interpol.   │——— 207
          └──────┬──────┘
                 │
                 ▼
          ┌─────────────┐
          │     End      │——— 208
          └─────────────┘
```

**Figure 2**

Pixel to be interpolated: red value r(x,y)

red values r(i,j) contributing to r(x,y)

g(m,n) may indicate an edge

b(p,q) may indicate en edge

# Figure 4

Gradient (in vector)

# Figure 5

Figure 6

Figure 7

Europäisches
Patentamt

European
Patent Office

Office européen
des brevets

## EUROPEAN SEARCH REPORT

Application Number

EP 08 15 6710

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JIMMY LI J S ET AL: "High Order Extrapolation Using Taylor Series for Color Filter Array Demosaicing" IMAGE ANALYSIS AND RECOGNITION LECTURE NOTES IN COMPUTER SCIENCE;;LNCS, SPRINGER, BERLIN, DE, vol. 3656, 1 January 2005 (2005-01-01), pages 703-711, XP019020202 ISBN: 978-3-540-29069-8 | 1,2,13, 14,25 | INV. G06T3/40 |
| A | * abstract *<br><br>* paragraphs [0001], [02.1] * | 3-12, 15-24 | |
| X | LI J S J ET AL: "Adaptive Colour Filter Array (CFA) Demosaicking with Mixed Order of Approximation" INFORMATION, DECISION AND CONTROL, 2007. IDC '07, IEEE, PI, 1 February 2007 (2007-02-01), pages 326-331, XP031181158 ISBN: 978-1-4244-0901-3 | 1,13,25 | |
| | | | TECHNICAL FIELDS SEARCHED (IPC) |
| A | * abstract *<br><br>* paragraph [0001] *<br>* page 327,, left-hand column, lines 1-17 * | 1-12, 14-24 | G06T |
| | -/-- | | |

The present search report has been drawn up for all claims

| Place of search | Date of completion of the search | Examiner |
|---|---|---|
| Munich | 30 October 2008 | Casteller, Maurizio |

EPO FORM 1503 03.82 (P04C01)

Europäisches
Patentamt
European
Patent Office
Office européen
des brevets

**EUROPEAN SEARCH REPORT**

Application Number

EP 08 15 6710

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | YU W: "Colour demosaicking method using adaptive cubic convolution interpolation with sequential averaging" IEE PROCEEDINGS: VISION, IMAGE AND SIGNAL PROCESSING, INSTITUTION OF ELECTRICAL ENGINEERS, GB, vol. 153, no. 5, 12 October 2006 (2006-10-12), pages 666-676, XP006027369 ISSN: 1350-245X * abstract * * paragraph [0002] * ----- | 1-25 | |
| A | EP 1 289 310 A (AGILENT TECHNOLOGIES INC [US]) 5 March 2003 (2003-03-05) * abstract; claim 1 * * paragraphs [0037], [0039] - [0041], [0046], [0047], [0058], [0059] * ----- | 1-25 | |

TECHNICAL FIELDS
SEARCHED      (IPC)

The present search report has been drawn up for all claims

| Place of search | Date of completion of the search | Examiner |
|---|---|---|
| Munich | 30 October 2008 | Casteller, Maurizio |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

&  : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 08 15 6710

This annex lists the patent family members relating to the patent documents cited in the above-mentioned European search report.
The members are as contained in the European Patent Office EDP file on
The European Patent Office is in no way liable for these particulars which are merely given for the purpose of information.

30-10-2008

| Patent document cited in search report | | Publication date | Patent family member(s) | | Publication date |
|---|---|---|---|---|---|
| EP 1289310 | A | 05-03-2003 | JP | 2003163939 A | 06-06-2003 |
| | | | US | 2003052981 A1 | 20-03-2003 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 3971065 A